Europäisches Patentamt

European Patent Office

Office européen des brevets

(11) Publication number: **0 259 074**
**A2**

# (12) EUROPEAN PATENT APPLICATION

(21) Application number: 87307423.1

(51) Int. Cl.⁴: **G01C 19/64**

(22) Date of filing: 21.08.87

(30) Priority: 29.08.86 GB 8620943

(43) Date of publication of application:
09.03.88 Bulletin 88/10

(84) Designated Contracting States:
DE FR GB IT NL

(71) Applicant: **BRITISH AEROSPACE PUBLIC
LIMITED COMPANY
11 Strand
London WC2N 5JT(GB)**

(72) Inventor: **Geen, John Albert BRITISH
AEROSPACE P.L.C.
NAVAL AND ELECTRONIC SYSTEMS DIV.
Downshire Way
Bracknell Berkshire RG12 1QL(GB)**
Inventor: **Guppy, David John BRITISH
AEROSPACE P.L.C.
NAVAL AND ELECTRONIC SYSTEMS DIV.
Downshire Way
Bracknell Berkshire RG12 1QL(GB)**
Inventor: **Brown, Terry Adrian P. BRITISH
AEROSPACE P.L.C.
NAVAL AND ELECTRONIC SYSTEMS DIV.
Downshire Way
Bracknell Berkshire RG12 1QL(GB)**

(74) Representative: **Smith, Denise Mary et al
British Aerospace plc Corporate Patents
Department Brooklands Road
Weybridge Surrey KT13 0SJ(GB)**

(54) Signal processing circuits.

(57) A dither pulse eliminator for use in a ring laser gyroscope comprises a feedback circuit for demodulating a combined gyroscope output signal so as to obtain the dither components and means for averaging the dither components so as to obtain residual dither error. Signals dependent on residual dither error are supplied to magnitude and phase adjustment means which adjust an incoming dither signal to reduce or eliminate residual dither error.

EP 0 259 074 A2

## SIGNAL PROCESSING CIRCUITS

This invention relates to the processing of an electrical signal comprising a wanted information bearing component and an unwanted component so as to remove or compensate for that unwanted component. More particularly but not exclusively it relates to the processing of the output signals from a dithered ring laser gyroscope so as to remove the dither component therefrom.

As disclosed in US patent specification No. 4,344,706, a ring laser gyroscope may be vibrated or 'dithered' about its sensitive axis to avoid lock-in effects and a compensating circuit can be provided which receives the laser gyroscope output signal, comprising a wanted component representative of the rotation to be measured and an unwanted component representative of the dither, and which also receives a dither angle signal representative of the dither only from a transducer coupled to the gyroscope and then so processes and combines the received signals as to produce an output from which the dither component is removed. The disclosed circuit converts both the laser gyroscope output and the dither angle signal to trains of pulses and then so combines them that the dither pulses cancel each other out. Thus, such a circuit can be called a 'dither pulse eliminator'.

A problem with such circuits is that although much effort and expense has been put into improving the quality and arrangement of the transducer for forming the dither angle signal, it is still the case that because of inaccurate representation of the dither motion by the dither angle signal there is induced an accumulative error in the compensated measurement.

Thus one object of this invention is to provide a dither pulse eliminator circuit which does not place such heavy reliance on the use of a high precision dither pick-off transducer.

According to the invention we provide a device for processing a dither signal comprising a feedback circuit including means for averaging the dither signal components and for measuring the residual dither error connected to means for adjusting the value of the incoming dither signal so as to reduce or eliminate said residual error.

Usually the device will be connected to means for combining the dither signal with a wanted information carrying signal, means for compensating the wanted signal in an effort to remove the dither signal components therefrom and means for demodulating the supposedly compensated signal to obtain the residual dither components.

Preferably, the adjusting means comprises means for adjusting the phase of the dither signal and means for adjusting the amplitude of the dither signal. In the embodiment to be described the device comprises first and second dither signal processing means and means for supplying phase-locked signals to each of the dither signal processing means so that the first dither processing means produces a signal indicative of the residual dither phase error and so that the second dither processing means produces a signal indicative of the residual dither amplitude error.

A ring laser gyroscope to be described comprises a device as hereinbefore defined and comprises means for combining the dither signal with signals representing the increments of rotation of the gyroscope and further comprising means for demodulating the dither signal from said combined signal prior to processing the dither signal so as to reduce or eliminate residual dither error.

For a better understanding of the invention, reference will be made, by way of example, to the accompanying drawings in which:

Figure 1 is a simplified circuit diagram of part of the output processing system for a dithered laser gyroscope.

Figure 2 is an embodiment of a digital demodulator which can be used in the circuit of Figure 1.

In the drawing, two trains of pulses DCW and DCCW are received along lines 1 and 2 respectively from a dithered laser gyroscope and output processing circuit (not shown), the pulses of train DCW represent increments of rotation of the gyroscope in one direction (clockwise) about its sensitive axis and the pulses of train DCCW representing like increments but in the other direction (counter-clockwise). The two pulse trains reflect, not only the gyroscope rotation which needs to be measured, but also the oscillatory dither movement of the gyroscope. To compensate for the dither component of the pulse trains, the signal DA from a dither transducer (not shown) coupled to the gyroscope is passed to a tracking analog-to-digital converter 3 which produces, at lines 4 and 5 trains of pulses CW and CCW representing the dither components, in the clockwise and counter-clockwise directions respectively, of the rotation of the laser gyroscope. The lines 1 and 5 are connected to the inputs of an OR gate 6 while the lines 2 and 4 are fed to the inputs of an OR gate 7, the outputs of the two OR gates being applied to respective ones of the count-up and count-down inputs of an up-down counter 8. Thus, the clockwise dither component CW is added to the counter-clockwise rotation (including dither) DCCW of the gyroscope output while the counter-clockwise dither component CCW is added to the clockwise rotation (including dither) DCW of the gyroscope output. The result, in the counter 8, is a summed content representative of the signal rotation to be measured. The content of counter 8 is periodically dumped to a computer 9.

The tracking A/D converter 3 may comprise a combination of an up-down counter, digital-to-analog converter, comparator amplifier and AND-gate arrangement as disclosed in US Patent Specification No. 4,344,706.

As disclosed in that specification, the converter 3 may be controlled by a synchronisation clock signal CL which is in anti-phase with another clock signal fed to the gyroscope output processing circuit such that the pulses of signals DCW and DCCW on the one hand and the pulses of signals CW and CCW on the other do not occur simultaneously so as to interfere with one another at the OR gates 6 and 7.

To allow for phase and amplitude errors of the signal DA, these being introduced by the imperfect nature of the dither transducer, the outputs of the OR gates 6 and 7 are each fed to each of two demodulators 10 and 11 respectively. A phase-locked loop oscillator circuit 12 is fed with a control signal extracted from within the A/D converter 3 as shown, such that the circuit 12 produces two signals, one in phase with and one in phase quadrature with the dither signal as it is received by the converter 3.

The function of the demodulators is to convert dither components in the compensated signal into direct current while converting all other components into alternating current with zero mean level. Thus, after integration only components originating from the dither will influence the pick-off signal adjusters.

The demodulators are a means of multiplying the compensated signal by the fundamental components of the dither. The resultant, when integrated, can be regarded as a cross correlation between the dither and gyroscope output. The overall pulse eliminator can then be regarded as a first order servomechanism nulling the cross correlation.

The in-phase and quadrature signals from the oscillator 12 are fed to respective ones of the two demodulators 10 and 11 each of which, by reference to the signal fed to it from the oscillator 12, demodulates the dither components of the signals at the outputs of the gates 6 and 7 and combines these components together to produce a resultant which, if the magnitude and phase of the dither signal received by the converter 3 is correct, should average to zero. If the dither signal magnitude is not correct, then the output of demodulator 10 will average to a non-zero value while if the phase is not correct the output of demodulator 11 will have a non-zero average value.

The dither transducer signal can be represented as containing a component in phase with the gyroscope output signal and a component in phase quadrature with the gyroscope output signal. Thus if the gyroscope output signal is represented as:

$Sg + A_g \sin W_D t$ , where $W_D$ is the dither frequency, $A_g$ is the amplitude of the dither related component of the gyroscope output signal and $Sg$ is the wanted gyroscope output signal, the dither transducer signal may be represented as:

$A_t \sin (W_D t + \emptyset_t)$

$= A_t (\cos \emptyset_t \sin W_D t + \sin \emptyset_t \cos W_D t)$

Where $\emptyset_t$ represents a phase error and $A_t$ is the maximum amplitude of the dither transducer signal.

Combining the gyroscope output and dither transducer signals

$$\underbrace{(A_g - A_t \cos \emptyset_t) \sin W_D t}_{1} + \underbrace{A_t \sin \emptyset_t \cos W_D t}_{2} + Sg$$

Quadrature demodulation will yield the second term giving the phase error $\emptyset_t$. When $\emptyset_t = 0$, phase demodulation will yield the first term giving the amplitude error $(A_g - A_t)$.

$\emptyset_t$ is small so that, generally, $\cos \emptyset_t \approx 1$ and the system yields good results for phase and amplitude errors from the outset.

By way of example, each of the demodulators 10 and 11 could comprise an up-down counter with a changeover switch at its input to alternate the signals from OR gates 6 and 7 between the count up and count down inputs of the counter, the operation of the changeover switch being controlled by the signal received from the oscillator 12.

3

To obtain the average values of the outputs from demodulators 10 and 11, respective digital integrators 13 and 14 are used. These may have a fixed or a controllable integration period as required.

The dither angle signal DA is fed to the converter 3 by way of a controllable magnitude adjuster 15, eg. a controllable attenuator, and by way of a controllable phase adjuster 16. These adjusters 15 and 16 receive control input signals from respective ones of the digital integrators 13 and 14 so as to correct the magnitude and phase of the dither angle signal received by the converter.

Instead of the phase-locked loop oscillator 12 controlled by a signal extracted from within the converter 3, the demodulation signals for the demodulators 10 and 11 could be obtained from a simple limiter and gating arrangement,fed possibly with the 'raw' dither angle signal DA, ie. tapped from a point upstream of the adjusters 15 and 16.

Although in the described embodiment, the digital signals from the gates 6 and 7 are kept as such and the demodulators and integrators 10, 11, 13 and 14 are implemented as digital devices, the apparatus and method could be implemented in analog form, eg. the signals from gates 6 and 7 could be converted to analog signals and then the demodulators and integrators could comprise linear circuits.

In an analogue system, an analogue multiplier integrated circuit could be used but, because of the accuracy limitations of this approach, it is more usual to invert the signal in synchrony with the dither. The latter implementation corresponds to multiplying the signal not only by the dither fundamental but also by its odd harmonics. In an ideal system, these extra products would be of no consequence because they would have zero mean and would therefore, be quelled by the subsequent integration. The non-ideality which forms the dominant error in such a system is odd harmonic distortion of the dither pick-off signal.

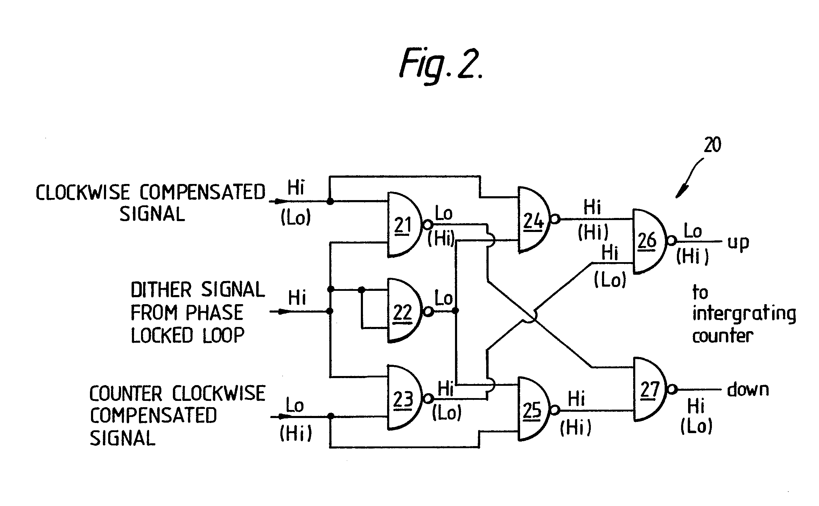

The digital implementation corresponding to analogue signal inversion is swapping of the clockwise and counterclockwise lines. Thus, the digital version is elegant in its implementation. Figure 2 shows it in terms of NAND gates, but it will be understood that there are many-other options.

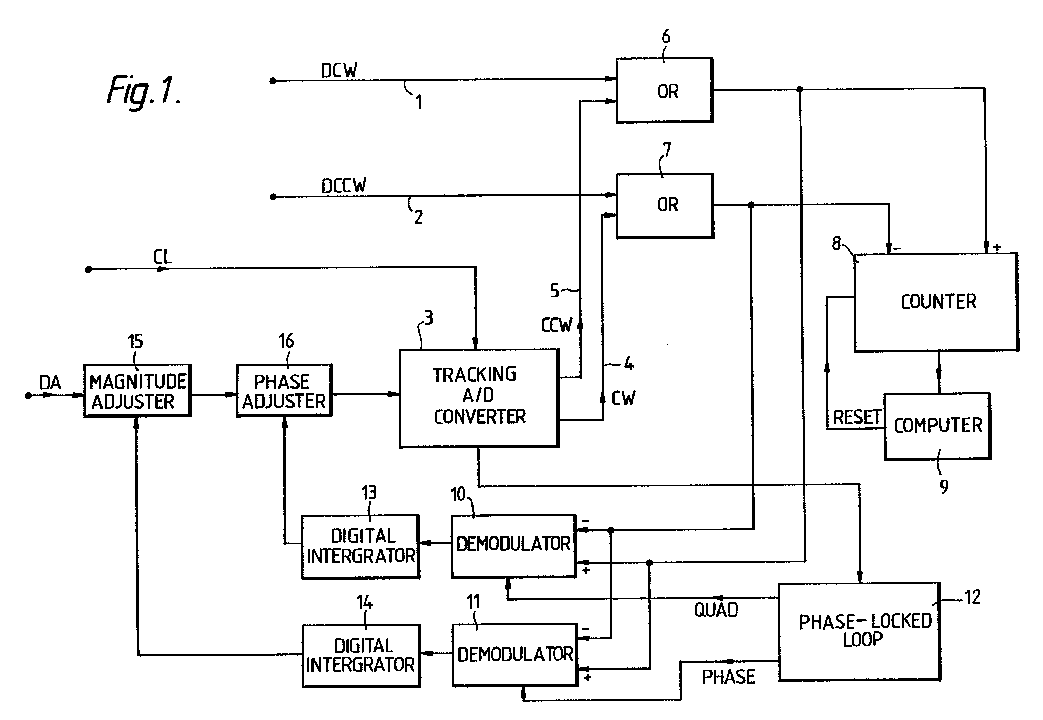

In Figure 2, a digital demodulator 20 (which could be used as component 10 or 11 in Figure 1) comprising seven NAND gates 21 - 27 is shown. Signal values are indicated for when the signal from the phase-locked loop 12 is high. When the signal from the phase locked loop is low the signal values are reversed at the up/down outputs to the integrating counter.

The system is arranged so that clockwise compensated signals and counter clockwise compensated signals do not arrive simultaneously at the input to the demodulation.

Since the system is linear it does not matter whether the compensated signals are combined and then demodulated or whether they are demodulated and then combined.

Although the invention has been described in its application to the correction, for dither, of the output from a laser gyroscope, it may also be useful in other situations where some 'dither' component in a wanted signal is to be compensated for.

## Claims

1. A device for processing a dither signal comprising a feedback circuit including means for averaging the dither signal components and for measuring the residual dither error connected to means for adjusting the value of the incoming dither signal so as to reduce or eliminate said residual dither error.

2. A device according to claim 1 connected to means for combining the dither signal with a wanted information carrying signal, means for compensating the wanted signal in an effort to remove the dither signal components therefrom and means for demodulating the supposedly compensated signal to obtain the residual dither components.

3. A device according to claim 1 or claim 2 wherein the adjusting means comprises means for adjusting the phase of the dither signal and means for adjusting the amplitude of the dither signal.

4. A device according to claim 3 comprising first and second dither signal processing means and means for supplying phase-locked signals to each of the dither signal processing means so that the first dither processing means produces a signal indicative of the residual dither phase error and so that the second dither processing means produces a signal indicative of the residual dither amplitude error.

5. A device according to claim 4 wherein each of the dither signal processing means comprises integrating means.

6. A ring laser gyroscope comprising a device according to any preceding claim.

7. A ring laser gyroscope according to claim 6 comprising means for combining the dither signal with signals representing the increments of rotation of the gyroscope and further comprising means for demodulating the dither signal from said combined signal prior to processing the dither signal so as to reduce or eliminate residual dither error.

Fig.1.

0 259 074

Fig.2.

to intergrating counter

0 259 074